# EUROPÄISCHE PATENTSCHRIFT

(11) **EP 1 083 346 B1**
(45) Veröffentlichungstag und Bekanntmachung des Hinweises auf die Patenterteilung: **22.09.2004**
(21) Anmeldenummer: 00115969.8
(22) Anmeldetag: 26.07.2000
(51) Int. Cl.: F16C 19/54

(54) **Radial-Axial-Lagereinheit**
Radial axial bearing unit
Unité de palier radial axial

(30) Priorität: 09.09.1999 DE 19942984
(43) Veröffentlichungstag der Anmeldung: 14.03.2001
(73) Patentinhaber: INA-Schaeffler KG, 91074 Herzogenaurach (DE)
(72) Erfinder: Dittenhöfer, Thomas, Dipl.-Ing., 97519 Riedbach (DE)

(56) Entgegenhaltungen:
- DE-A- 2 738 287
- DE-A- 2 917 425
- GB-A- 988 169
- US-A- 4 705 490

## Beschreibung

### Anwendungsgebiet der Erfindung

Die Erfindung betrifft eine Radial-Axial-Lagereinheit mit einem Radialkräfte aufnehmenden Zylinderrollenlager, dessen Außenring mit einem radial nach innen gerichteten Flansch versehen ist und einem zweiseitig wirkenden Axial-Zylinderrollenlager, dessen Laufbahnen durch eine erste und eine zweite Laufscheibe sowie den Flansch gebildet sind, wobei die erste Laufscheibe unmittelbar an einer Stirnfläche eines Innenringes des Zylinderrollenlagers anliegt und Mittel zur Einstellung der Spielfreiheit des Axial-Zylinderrollenlagers vorhanden sind.

### Hintergrund der Erfindung

Ein derart gattungsgemäßes Radial- und Axialwälzlager ist aus der DE 10 37 775 B vorbekannt. Dieses kombinierte Lager soll hauptsächlich zur Spindellagerung von Werkzeugmaschinen eingesetzt werden und besteht aus einem doppelreihigen Zylinderrollenlager zur Aufnahme der Radialkräfte, dessen Innenring zwei äußere Borde und einen Mittelbord aufweist. Der Außenring dieses doppelreihigen Zylinderrollenlagers ist S-förmig gestaltet, d. h. er weist an einem Ende einen radial nach außen und am anderen Ende einen radial nach innen weisenden Flansch auf. Der nach außen gerichtete Flansch dient zur Befestigung des Lagers an einer Anschlußkonstruktion. Der radial nach innen gerichtete Flansch des S-förmigen Außenringes bildet die beiden innen liegenden Laufbahnen für ein zweiseitig wirkendes Axial-Zylinderrollenlager. Dessen außen liegende Laufbahnen werden durch je eine Laufscheibe gebildet. Das Axial-Zylinderrollenlager wird über eine auf die Welle aufgesetzte Mutter mit Hilfe eines Zwischenringes vorgespannt.

Der Hauptnachteil dieser Lagerkonstruktion liegt darin, dass die Spielfreiheit bzw. die Einstellung der Lagervorspannung durch den Kunden selbst über die Spannmutter vorgenommen werden muss. Ist die Vorspannung zu hoch, so kann das Lager heißlaufen. Ist das Lager jedoch ungenügend vorgespannt, so besteht die Gefahr, dass das unsachgemäß gelagerte Teil die Funktion einer ganzen Maschine negativ beeinflusst. Ein weiterer Nachteil liegt darin, dass dieses Radial-Axial-Lager mit zusätzlichen Teilen vorgespannt werden muss. Dies bedeutet, die Vorspannmutter und der Zwischenring sind zusätzlich zu fertigen. Außerdem muss für die Spannmutter die zu lagernde Welle in diesem Bereich mit einem Außengewinde versehen sein. Durch diese Bauteile, d. h. durch die Vorspannmutter und den Zwischenring können auch Fertigungsungenauigkeiten durch Schiefstellung zusätzlich in die Gesamtkonstruktion eingebracht werden. Ein weiterer Nachteil liegt schließlich darin, dass der Außenring des Radialzylinderrollenlagers aufgrund seiner S-Form sehr aufwändig zu fertigen ist. Das gleiche trifft für den Innenring des Zylinderrollenlagers aufgrund seiner drei Borde zu. Bedingt durch die vorstehend aufgeführten Nachteile ist eine solche Lagerkonstruktion in Fertigung und Handhabung sehr umständlich.

### Zusammenfassung der Erfindung

Der Erfindung liegt die Aufgabe zu Grunde, ein kombiniertes Radial-Axial-Wälzlager zu schaffen, das sich einfacher fertigen und durch den Kunden auch wesentlich einfacher handhaben lässt.

Erfindungsgemäß wird diese Aufgabe nach dem kennzeichnenden Teil von Anspruch 1 dadurch gelöst, dass der Flansch trennend zwischen dem Zylinderrollenlager und dem Axial-Zylinderrollenlager angeordnet ist und auf diese Weise eine erste Laufbahn für das Axial-Zylinderrollenlager bildet, eine zweite und eine dritte Laufbahn durch die zwischen beiden Zylinderrollenkränzen des Axial-Zylinderrollenlagers angeordnete erste Laufscheibe und eine vierte Laufbahn durch die zweite Laufscheibe gebildet sind, wobei die zweite Laufscheibe mit dem Außenring über Befestigungsschrauben verbunden ist und die Spielfreiheit des Axial-Zylinderrollenlagers über die axiale Ausdehnung der ersten Laufscheibe einstellbar ist.

Der entscheidende Vorteil der erfindungsgemäßen Lösung liegt darin, dass durch die Verbindung von zweiter Laufscheibe mit dem Außenring des Radialzylinderrollenlagers die Lagervorspannung durch den Hersteller einstellbar ist. Dies vereinfacht dem Lagerkunden die Handhabung eines solchen kombinierten Radial-Axial-Lagers und vermeidet Lagerfehler durch unsachgemäße Einstellung der Vorspannung durch den Kunden. Außerdem lässt sich ein solches Lager wesentlich kostengünstiger fertigen, da eine zusätzliche Einrichtung zur Einstellung der Lagervorspannung in Form von Stellmutter und Kraft übertragenden Zwischenring nicht mehr notwendig ist. Diese nicht mehr erforderlichen Teile verbessern auch die Fertigungsgenauigkeit der gesamten Lagerkonstruktion, da Formfehler von Stellmutter und Zwischenring (Schiefstellung) nicht mehr in die Gesamtlagerkonstruktion eingehen. Ein weiterer Vorteil liegt darin, dass Innen- und Außenring des Radialzylinderrollenlagers aufgrund ihrer Form wesentlich kostengünstiger hergestellt werden können und somit die gesamte Lagerkonstruktion nochmals verbilligen.

Weitere vorteilhafte Ausgestaltungen der Erfindung sind in den Unteransprüchen 2 bis 10 beschrieben.

So ist nach Anspruch 2 vorgesehen, dass der Innenring im Bereich des Flansches einen diesen entgegen gerichteten Bord aufweist. Durch den Bord ist sichergestellt, dass der Innenring nicht aus der Lageranordnung herausgezogen werden kann, d. h. es ist eine selbstständige unverlierbare Baueinheit gebildet. Nach einem anderen Merkmal gemäß Anspruch 3 ist vorgesehen, dass der Innenring und die erste Laufscheibe einstückig miteinander verbunden sind. Durch diese Einstückigkeit wird aufgrund geringer Teilzahl der Montagevorgang des Gesamtlagers erleichtert. Aus Anspruch 4 geht hervor, dass die zweite Laufscheibe den Außenring in radialer Richtung überragt und in diesem Bereich mit Bohrungen zur Befestigung an einer Anschlußkonstruktion versehen ist. Zum verbesserten Sitz der gesamten Lagerkonstruktion in einer Anschlußkonstruktion ist gemäß Anspruch 5 vorgesehen, dass der Außenring wenigstens auf einem Teil seiner Mantelfläche mit einer zylindrischen Zentrierfläche zur zentrischen Führung in einer entsprechenden Bohrung einer Anschlußkonstruktion versehen ist. Nach einem anderen zusätzlichen Merkmal gemäß Anspruch 6 soll zwischen Außenring und Innenring des Radialzylinderrollenlagers eine Dichtung angeordnet sein. In weiteren Merkmalen gemäß den Ansprüchen 7, 8 und 9 ist die Schmierung der kombinierten Lagereinheit beschrieben. So ist nach Anspruch 7 vorgesehen, dass der Außenring mit einer axialen Schmiermittelzuführungsbohrung versehen ist, die mit einer radialen Schmiermittelzuführungsbohrung verbunden ist, wobei nach Anspruch 8 die Laufscheibe ebenfalls mit einer axialen und einer radialen Schmiermittelzuführungsbohrung ausgestattet ist. In Anspruch 9 ist die Ausgestaltung der Radial-Axial-Lagereinheit mit Schmiermittelabführungsbohrungen unter Schutz gestellt. Schließlich soll nach einem weiteren Merkmal der Erfindung gemäß Anspruch 10 diese Lagerung für Hauptzylinder in Druckmaschinen verwendet werden.

Die Erfindung wird an nachstehendem Ausführungsbeispiel näher erläutert.

### Kurze Beschreibung der Zeichnungen

Es zeigen:
- Figur 1: einen Querschnitt durch eine erfindungsgemäß ausgestaltete Radial-Axial-Lagereinheit und
- Figur 2: eine Seitenansicht der Lagereinheit nach Figur 1.

### Ausführliche Beschreibung der Zeichnung

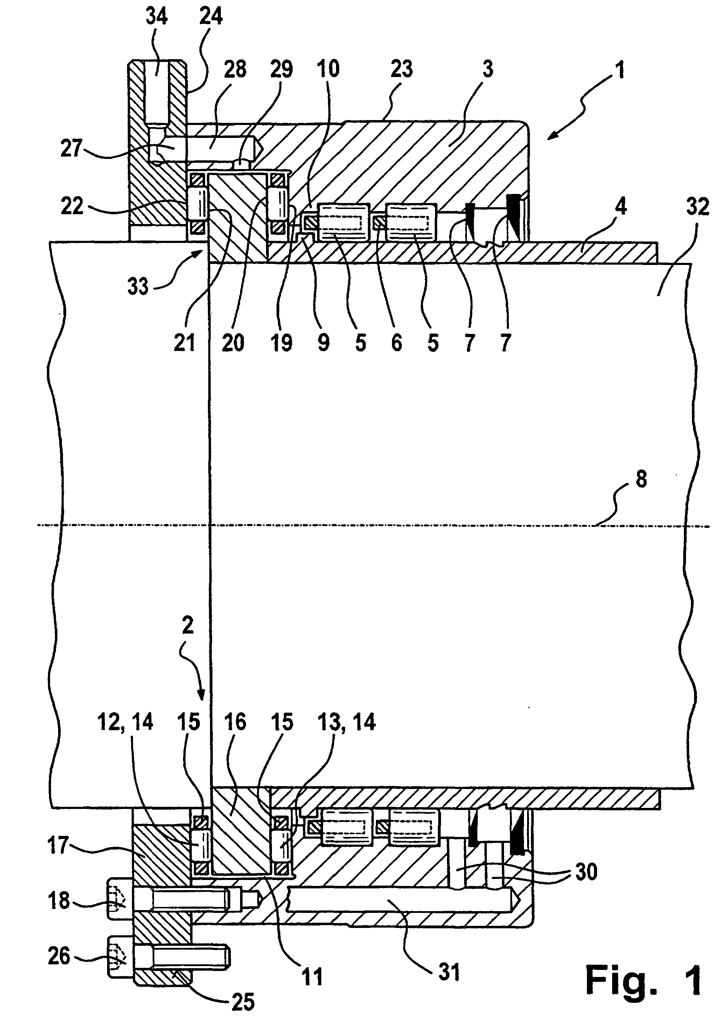

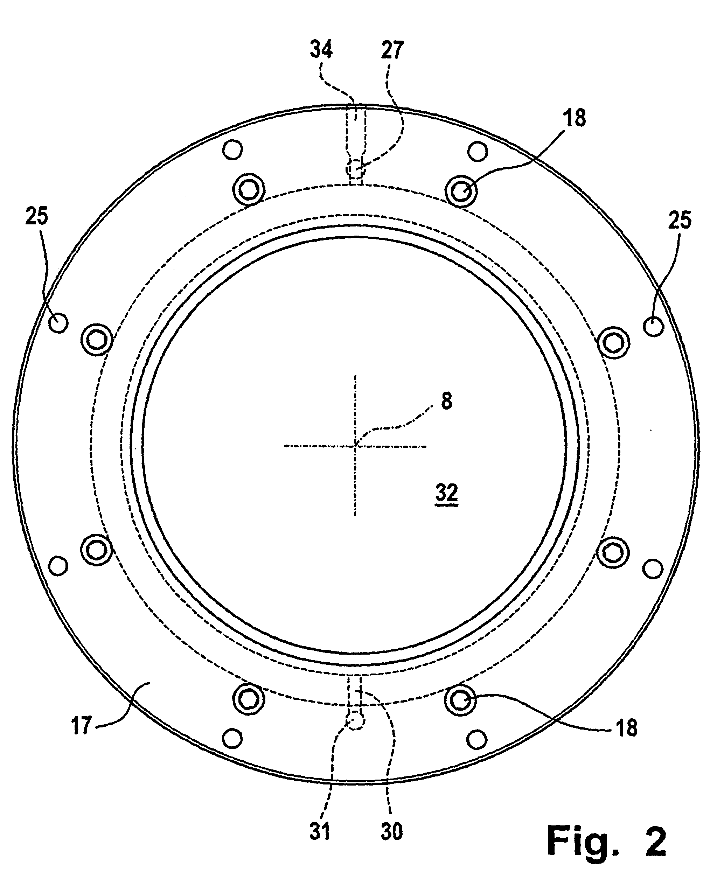

Das in den Figuren 1 und 2 gezeigte erfindungsgemäße Radial-Axial-Wälzlager besteht aus dem zweireihigen Zylinderrollenlager 1, das aber auch einreihig ausgebildet sein kann, und dem zweiseitig wirkendem Axial-Zylinderrollenlager 2. Gelagert ist die um ihre Achse 8 rotierende Welle 32 mit dem Absatz 33. Das Zylinderrollenlager 1 besitzt den Außenring 3, der Radialkräfte und einseitige Axialkräfte sowie Kippmomente aufnimmt. Zum Radiallager 1 gehören weiterhin der Innenring 4 sowie auf nicht bezeichneten Laufbahnen abwälzende Zylinderrollen 5, die im Käfig 6 geführt sind. Nach außen ist das Zylinderrollenlager 1 durch die Dichtungen 7 geschützt, die zwischen Außenring 3 und Innenring 4 angeordnet ist. Zum Innenring 4 gehört der radial nach außen gerichtete Bord 9, der im Bereich des radial nach innen gerichteten Flansches 10 des Außenringes 3 angeordnet ist. Durch den Flansch 10 ist im Außenring 3 die Ausnehmung 11 in axialer Richtung begrenzt, in der das Axial-Zylinderrollenlager 2 mit seinen beiden Zylinderrollenkränzen 12, 13 untergebracht ist. Deren Zylinderrollen 14 sind in Käfigen 15 geführt. Zwischen den beiden Zylinderrollenkränzen 12, 13 befindet sich die erste Laufscheibe 16 (Wellenscheibe), die am Absatz 33 der Welle 32 anliegt, während die zweite Laufscheibe 17 (Gehäusescheibe) über Befestigungsschrauben 18 mit dem Außenring 3 des Zylinderrollenlagers 1 verbunden ist. Auf diese Weise sind für das zweiseitig wirkende Axial-Zylinderrollenlager 2 vier Laufbahnen gebildet, wobei die erste Laufbahn 19 vom Flansch 10 des Außenringes 3 gebildet ist, die zweite Laufbahn 20 und die dritte Laufbahn 21 von der ersten Laufscheibe 16 gestellt werden und schließlich die vierte Laufbahn 22 von der zweiten Laufscheibe 17 gebildet wird. Die zweite Laufscheibe 17 überragt den Außenring 3 in radialer Richtung und ist in diesem Bereich mit Bohrungen 25 versehen, in die Befestigungsschrauben 26 eingeführt sind und so die gesamte Lagerkonstruktion mit einer nicht dargestellten Anschlußkonstruktion verbinden. Um einen sehr präzisen Sitz des erfindungsgemäßen Lagers in der Anschlußkonstruktion zu gewährleisten, ist der Außenring 3 mit der Zentrierfläche 23 versehen. Die Zentrierfläche 13 erstreckt sich über einen Teil der Mantelfläche des Außenringes 3 und sorgt dafür, dass ein zentrischer Sitz in einer entsprechenden Bohrung der Anschlußkonstruktion gegeben ist. Die zweite Laufscheibe 17 liegt mit einem Teil ihrer Stirnfläche 24 an der Wandung der Anschlußkonstruktion an.

Wie die Figuren weiter zeigen, ist sowohl die zweite Laufscheibe 17 als auch der Außenring 3 mit axialen 27, 28 und radialen Schmiermittelzuführungsbohrungen 34, 29 versehen. Die Schmiermittelzuführungsbohrungen 34, 27, 28 und 29 sind untereinander verbunden, so dass von außen Schmiermittel in die Ausnehmung 11 gelangt und von dort durch Rotation über beide Lager 2, 1 gleichmäßig verteilt wird. Aus der unteren Hälfte von Figur 1 und Figur 2 ist ersichtlich, dass zur Ableitung von verbrauchtem Schmiermittel sowohl der Außenring 3 als auch die zweite Laufscheibe 17 mit radialen 30 und mit axialen Schmiermittelabführungsbohrungen 31 ausgestattet ist.

### Bezugszeichen

- 1: Zylinderrollenlager
- 2: Axial-Zylinderrollenlager
- 3: Außenring
- 4: Innenring
- 5: Zylinderrolle
- 6: Käfig
- 7: Dichtung
- 8: Achse
- 9: Bord
- 10: Flansch
- **11**: Ausnehmung
- 12: Zylinderrollenkranz
- 13: Zylinderrollenkranz
- 14: Zylinderrolle
- 15: Käfig
- 16: erste Laufscheibe (Wellenscheibe)
- 17: zweite Laufscheibe (Gehäusescheibe)
- 18: Befestigungsschraube
- 19: erste Laufbahn
- 20: zweite Laufbahn
- 21: dritte Laufbahn
- 22: vierte Laufbahn
- 23: Zentrierfläche
- 24: Stirnfläche
- 25: Bohrung
- 26: Befestigungsschraube
- 27: axiale Schmiermittelzuführungsbohrung
- 28: axial Schmiermittelzuführungsbohrung
- 29: radiale Schmiermittelzuführungsbohrung
- 30: radiale Schmiermittelabführungsbohrung
- 31: axiale Schmiermittelabführungsbohrung
- 32: Welle
- 33: Absatz
- 34: radiale Schmiermittelzuführungsbohrung

## Patentansprüche

1. Radial-Axial-Lagereinheit mit einem Radialkräfte aufnehmenden Zylinderrollenlager (1), dessen Außenring (3) mit einem radial nach innen gerichteten Flansch (10) versehen ist und einem zweiseitig wirkenden Axial-Zylinderrollenlager (2), dessen Laufbahnen durch eine erste und eine zweite Laufscheibe (16,17) sowie den Flansch (10) gebildet sind, wobei die erste Laufscheibe (16) unmittelbar an einer Stirnfläche eines Innenringes (4) des Zylinderrollenlagers (1) anliegt und Mittel zur Einstellung der Spielfreiheit des Axial-Zylinderrollenlagers (2) vorhanden sind, **dadurch gekennzeichnet, dass** der Flansch (10) trennend zwischen dem Zylinderrollenlager (1) und dem Axial-Zylinderrollenlager (2) angeordnet ist und auf diese Weise eine erste Laufbahn (19) für das Axial-Zylinderrollenlager (2) bildet, eine zweite und eine dritte Laufbahn (20, 21) durch die zwischen beiden Zylinderrollenkränzen (12,13) des Axial-Zylinderrollenlagers (2) angeordnete erste Laufscheibe (16) und eine vierte Laufbahn (22) durch die zweite Laufscheibe (17) gebildet sind, wobei die zweite Laufscheibe (17) mit dem Außenring (3) über Befestigungsschrauben (18) verbunden ist und die Spielfreiheit des Axial-Zylinderrollenlagers (2) über die axiale Ausdehnung der ersten Laufscheibe (16) einstellbar ist.

2. Radial-Axial-Lagereinheit nach Anspruch 1, **dadurch gekennzeichnet, dass** der Innenring (4) im Bereich des Flansches (10) einen diesen entgegengerichteten Bord (9) aufweist.

3. Radial-Axial-Lagereinheit nach Anspruch 1, **dadurch gekennzeichnet, dass** der Innenring (4) und die erste Laufscheibe (16) einstückig miteinander verbunden sind.

4. Radial-Axial-Lagereinheit nach Anspruch 1, **dadurch gekennzeichnet, dass** die zweite Laufscheibe (17) den Außenring (3) in radialer Richtung überragt und in diesem Bereich mit Bohrungen (25) zur Befestigung an einer Anschlußkonstruktion versehen ist.

5. Radial-Axial-Lagereinheit nach Anspruch 1, **dadurch gekennzeichnet, dass** der Außenring (3) wenigstens auf einem Teil seiner Mantelfläche eine zylindrische Zentrierfläche (23) zur zentrischen Führung in einer entsprechenden Bohrung einer Anschlußkonstruktion aufweist.

6. Radial-Axial-Lagereinheit nach Anspruch 1, **dadurch gekennzeichnet, dass** zwischen dem Außenring (3) und dem Innenring (4) wenigstens eine Dichtung (7) angeordnet ist.

7. Radial-Axial-Lagereinheit nach Anspruch 1, **dadurch gekennzeichnet, dass** der Außenring (3) mit einer axialen Schmiermittelzuführungsbohrung (28) versehen ist, die mit einer radialen Schmiermittelzuführungsbohrung (29) verbunden ist.

8. Radial-Axial-Lagereinheit nach Anspruch 1, **dadurch gekennzeichnet, dass** die zweite Laufscheibe (17) mit einer axialen Schmiermittelzuführungsbohrung (27) versehen ist, die mit einer radialen Schmiermittelzuführungsbohrung (34) verbunden ist.

9. Radial-Axial-Lagereinheit nach Anspruch 1, **dadurch gekennzeichnet, dass** der Außenring (3) wenigstens mit einer radialen Schmiermittelabführungsbohrung (30) versehen ist, die mit einer axialen Schmiermittelabführungsbohrung (31) verbunden ist.

10. Radial-Axial-Lagereinheit nach Anspruch 1, **dadurch gekennzeichnet, dass** es zur Lagerung eines Hauptzylinders einer Druckmaschine verwendet wird.

## Claims

1. Radial-axial bearing assembly comprising a cylindrical roller bearing (1) that supports radial forces, an outer ring (3) of said cylindrical roller bearing being provided with a radially inwards directed flange (10), said radial-axial bearing assembly further comprising a double-direction axial cylindrical roller bearing (2) having raceways formed by a first and a second raceway washer (16, 17) and by said flange (10), the first raceway washer (16) bearing directly against an end face of an inner ring (4) of the cylindrical roller bearing (1), and means being provided for adjusting the freedom from play of the axial cylindrical roller bearing (2), **characterised in that** the flange (10) is arranged between the cylindrical roller bearing (1) and the axial cylindrical roller bearing (2) so as to separate them from each other and thus forms a first raceway (19) for the axial cylindrical roller bearing (2), a second and a third raceway (20, 21) are formed by the first raceway washer (16) arranged between the two cylindrical roller crown rings (12, 13) of the axial cylindrical roller bearing (2) and a fourth raceway (22) is formed by the second raceway washer (17) that is connected to the outer ring (3) with fixing screws (18), and the freedom from play of the axial cylindrical roller bearing (2) can be adjusted through the axial dimension of the first raceway washer (16).

2. Radial-axial bearing assembly according to claim 1, **characterised in that** the inner ring (4) comprises in the region of the flange (10), a rim (9) directed oppositely to the flange (10).

3. Radial-axial bearing assembly according to claim 1, **characterised in that** the inner ring (4) and the first raceway washer (16) are made in one piece with each other.

4. Radial-axial bearing assembly according to claim 1, **characterised in that** the second raceway washer (17) projects beyond the outer ring (3) in radial direction and is provided in this region with bores (25) for fixing on a connecting structure.

5. Radial-axial bearing assembly according to claim 1, **characterised in that** the outer ring (3) comprises, at least on a part of its outer peripheral surface, a cylindrical centering surface (23) for centered guidance in a corresponding bore of a connecting structure.

6. Radial-axial bearing assembly according to claim 1, **characterised in that** at least one seal (7) is arranged between the outer ring (3) and the inner ring (4).

7. Radial-axial bearing assembly according to claim 1, **characterised in that** the outer ring (3) is provided with an axial lubricant supply bore (28) that communicates with a radial lubricant supply bore (29).

8. Radial-axial bearing assembly according to claim 1, **characterised in that** the second raceway washer (17) is provided with an axial lubricant supply bore (27) that communicates with a radial lubricant supply bore (34).

9. Radial-axial bearing assembly according to claim 1, **characterised in that** the outer ring (3) is provided with at least one radial lubricant discharge bore (30) that communicates with an axial lubricant discharge bore (31).

10. Radial-axial bearing assembly according to claim 1, **characterised in that** it is used for mounting a master cylinder of a printing press.

## Revendications

1. Ensemble de roulement radial-axial comprenant un roulement (1 ) à galets qui supporte des forces radiales et dont la bague externe (3) est munie d'une bride (10) orientée radialement vers l'intérieur, ledit ensemble de roulement comprenant, en outre, une butée (2) bi-directionnelle à galets dont les pistes de roulement sont formées par une première et une seconde rondelle de roulement (16, 17) et par la bride (10), la première rondelle de roulement (16) s'appuyant directement sur une face frontale d'une bague interne (4) du roulement (1) à galets, il étant prévu des moyens d'ajustage de l'absence de jeu de la butée (2) à galets, **caractérisé en ce que** la bride (10) est agencée entre le roulement (1) à galets et la butée (2) à galets de manière à les séparer, l'un de l'autre, cette bride (10) formant, de cette façon, une première piste de roulement (19) pour la butée (2) à galets, une seconde et une troisième piste de roulement (20, 21) étant formées par la première rondelle de roulement (16) qui est agencée entre les deux couronnes (12, 13) à galets de la butée (2) à galets, pendant qu'une quatrième piste de roulement (22) est formée par la seconde rondelle de roulement (17) qui est reliée à la bague externe (3) par des vis de fixation (18), et l'absence de jeu de la butée (2) à galets peut être ajustée à l'aide de l'étendue axiale de la première rondelle de roulement (16).

2. Ensemble de roulement radial-axial selon la revendication 1, **caractérisé en ce que** la bague interne (4) comprend, dans la région de la bride (10) un collet (9) orienté à l'opposé de celle-ci.

3. Ensemble de roulement radial-axial selon la revendication 1, **caractérisé en ce que** la bague interne (4) et la première rondelle de roulement (16) sont faites en une seule pièce, l'une avec l'autre.

4. Ensemble de roulement radial-axial selon la revendication 1, **caractérisé en ce que** la seconde rondelle de roulement (17) fait saillie de la bague externe (3) dans la direction radiale et comprend, dans cette région, des alésages (25) pour la fixation sur une structure de raccordement.

5. Ensemble de roulement radial-axial selon la revendication 1, **caractérisé en ce que** la bague externe (3) est munie, au moins sur une partie de sa surface périphérique extérieure, d'une surface cylindrique de centrage (23) afin de réaliser un guidage centré dans un alésage correspondant d'une structure de raccordement.

6. Ensemble de roulement radial-axial selon la revendication 1, **caractérisé en ce que**, au moins une garniture d'étanchéité (7) est agencée entre la bague externe (3) et la bague interne (4).

7. Ensemble de roulement radial-axial selon la revendication 1, **caractérisé en ce que** la bague externe (3) est munie d'un alésage axial (28) d'amenée de lubrifiant qui communique avec un alésage radial (29) d'amenée de lubrifiant.

8. Ensemble de roulement radial-axial selon la revendication 1, **caractérisé en ce que** la seconde rondelle de roulement (17) est munie d'un alésage axial (27) d'amenée de lubrifiant qui communique avec un alésage radial (34) d'amenée de lubrifiant.

9. Ensemble de roulement radial-axial selon la revendication 1, **caractérisé en ce que** la bague externe (3) est munie d'au moins un alésage radial (30) de décharge de lubrifiant qui communique avec un alésage axial (31) de décharge de lubrifiant.

10. Ensemble de roulement radial-axial selon la revendication 1, **caractérisé en ce qu'**il est utilisé pour le montage d'un maître-cylindre d'une machine à imprimer.
